# EUROPEAN PATENT APPLICATION

(11) **EP 2 770 011 A1**
(43) Date of publication of application: **27.08.2014**
(21) Application number: 12841205.3
(22) Date of filing: 29.08.2012
(51) Int. Cl.: C08G 69/24, C08L 77/02, C08L 101/16

(54) **BIODEGRADABLE POLYMER WITH CONTROLLED BIODEGRADABILITY**

(30) Priority: 21.10.2011 JP 2011231817; 02.03.2012 JP 2012046422
(71) Applicant: National Institute of Advanced Industrial Science and Technology, Tokyo 100-8921 (JP)
(72) Inventor: YAMANO, Naoko, Ikeda-shi Osaka 563-8577 (JP); KAWASAKI, Norioki, Ikeda-shi Osaka 563-8577 (JP); NAKAYAMA, Atsuyoshi, Ikeda-shi Osaka 563-8577 (JP)
(74) Representative: Mai, Dörr, Besier
(86) International application number: PCT/JP2012/071780
(87) International publication number: WO 2013/058019

(57) **Abstract**

Disclosed is a biodegradable polymer comprising an optionally substituted aliphatic hydrocarbon group having 5 or more carbon atoms at at least one terminal of the polymer chain, wherein the biodegradable polymer has a weight-average molecular weight of not less than 35,000 when the biodegradable polymer has a 2-pyrrolidone polymer or copolymer as its main chain and stearic acid at the terminal of the polymer chain; a molded article comprising the biodegradable polymer; and a method for controlling biodegradability of a biodegradable polymer, comprising introducing an optionally substituted aliphatic hydrocarbon group into the terminal of the polymer chain of the biodegradable polymer.

## Description

### Technical Field

The present invention relates to a biodegradable polymer with controlled biodegradability, and a molded article containing the biodegradable polymer. The present invention further relates to a method for controlling biodegradability of a biodegradable polymer.

### Background Art

Polyamide 4 (hereinafter, may also be referred to as PA4) has a feature of being synthesized from biomass. Specifically, a monomer, 2-pyrrolidone, used as a raw material therefor can be obtained from γ-aminobutyric acid that is made by decarboxylating glutamic acid, which is industrially manufactured by fermenting biomass (i.e., glucose). Polyamide 4 has excellent thermal and mechanical properties because of the strong intermolecular hydrogen bonds due to its macromolecular chain structure comprising short methylene chains. Further, among polyamides, only polyamide 4 is biodegraded by microorganisms in the natural environment, e.g., activated sludge, seawater, and soil. The polymerization mechanism involves bonding of an initiator to form propagation species, and the macromolecular design of polyamide 4 is therefore easy.

Polyamide 4 was synthesized for the first time in 1956 by William O. Ney et al. by using metallic potassium as a basic catalyst and an acyl group-containing compound as an activator, to thereby cause ring-opening polymerization of 2-pyrrolidone to proceed by an activated monomer mechanism (Patent Document 1). Based on this technique, new technologies pertaining to new catalytic systems, polymerization procedures, copolymerization with ε-caprolactam and the like were continually developed from the 1950s through the 1990s with the aim of increasing the molecular weight, controlling polydispersity, and simplifying the manufacturing process (Non Patent Documents 1 to 5). Generally, such technologies were intended to manufacture linear polyamide 4 as a commodity material to fabricate fibers and films by melt processing, which is economically advantageous. Although some of the research led to a technology development whereby melt spinning of polyamide 4 became possible, its commercialization was hampered by drawbacks, such as insufficient strength and difficulty in molding.

For overcoming these drawbacks, Patent Document 2 teaches that polymerization of 2-pyrrolidone by using a basic polymerization catalyst and a carboxylic acid compound produces a uniquely structured 2-pyrrolidone polymer containing structures derived from the carboxylic acid compound, and that the physical properties, such as thermal stability and moldability, of the thus-obtained 2-pyrrolidone polymer can be controlled and improved.

Further, Patent Document 3 discloses performing copolymerization of 2-pyrrolidone and ε-caprolactam upon polymerization of 2-pyrrolidone using a basic polymerization catalyst and an initiator having a branched structure with two or more branches, so as to control the polymer chain structure and the polymer chain composition. Patent Document 3 states that the method enables modification of the polymer property (thermal and mechanical properties).

As described above, polyamide 4 is a high-performance plastic regarded as an engineering plastic. However, it is not suitable for usages requiring long-term stability because of its biodegradability. This has been a major problem in the practical use of polyamide 4.

### Prior Art Documents

### ■ Patent Documents

Patent Document 1: US Patent No. 2,739,959
Patent Document 2: JP 2002-265596A
Patent Document 3: JP 2009-155608A

### ■ Non-Patent Document

Non-Patent Document 1: Chuchma, F. et al., Polymer, 24, 1491-1494 (1983)
Non-Patent Document 2: Kobayashi, F. et al., Journal of Polymer Science: Part A, 1, 111-123 (1963)
Non-Patent Document 3: Barzakay, S. et al., Journal of Polymer Science: Part A-1, 4, 2211-2218 (1966)
Non-Patent Document 4: Barzakay, S. et al., Journal of Polymer Science: Part A-1, 5, 965-974 (1967)
Non-Patent Document 5: Tani, H. et al., Journal of Polymer Science: Part A-1, 4, 301-318 (1966)

### Summary of Invention

### Technical Problem

To solve the above problems of polyamide 4, copolymerization with non-biodegradable polyamide 6 or other polymers, modification of side chains, and the like have been discussed. Since a great change in the polymer chain results in a loss of the advantageous properties of polyamide 4, there has been a need for a method that renders polyamide 4 non-biodegradable while still maintaining its property.

Accordingly, an object of the present invention is to provide a biodegradable polymer having controlled biodegradability, without changing the basic structure thereof; and a molded article containing the biodegradable polymer. Further, another object of the present invention is to provide a method for controlling the biodegradability of a biodegradable polymer, while keeping the basic structure thereof.

### Solution to Problem

Polyamide 4 is polymerized by activating 2-pyrrolidone, which is a five-membered lactam, with a base, using an acyl compound as an initiator. By using an acyl compound having a long methylene chain as an initiator, polyamide 4 having a long-chain fatty acid, such as stearic acid, at the terminal of the polymer chain can be obtained. The present inventors found that this kind of polyamide 4 lost its original biodegradability, and thereby is not readily biodegraded by biodegrading bacteria, activated sludge, or the like.

As such, the present inventors discovered that the above object can be accomplished by introducing an aliphatic hydrocarbon group into the terminal of the polymer chain of polyamide 4, which is originally biodegradable, thereby imparting non-biodegradability to polyamide 4. Further, the present inventors also discovered that it is possible to impart non-biodegradability to biodegradable polymers other than polyamide 4, such as polybutylene succinate-co-adipate (PBSA) or polycaprolactone (PCL), by introducing an aliphatic hydrocarbon group into the terminal of the polymer chain.

The present invention was completed as a result of extensive research based on the above finding, and provides the following biodegradable polymers, molded articles containing the biodegradable polymer, methods for controlling biodegradability, and the like.

### (I) Biodegradable Polymer

(I-1). A biodegradable polymer comprising an optionally substituted aliphatic hydrocarbon group having 5 or more carbon atoms at at least one terminal of the polymer chain, wherein the biodegradable polymer has a weight-average molecular weight of not less than 35,000 when the biodegradable polymer has a 2-pyrrolidone polymer or copolymer as its main chain and stearic acid at the terminal of the polymer chain.
(I-2). The biodegradable polymer according to (I-1), wherein the biodegradable polymer has a 2-pyrrolidone polymer or copolymer as its main chain.
(I-3). The biodegradable polymer according to (I-2), wherein the biodegradable polymer is obtained by a polymerization reaction using a basic polymerization catalyst, and a fatty acid halide, a fatty acid anhydride, or a fatty acid ester.
(I-4). The biodegradable polymer according to (I-2) or (I-3), wherein the 2-pyrrolidone copolymer is a copolymer of 2-pyrrolidone and a lactam.
(I-5). The biodegradable polymer according to (I-4), wherein the lactam is ε-caprolactam.
(I-6). A resin composition comprising the biodegradable polymer according to any one of (I-2) to (I-5), and a 2-pyrrolidone polymer or copolymer having a branched structure with two or more branches derived from an initiator.
(I-7). The resin composition according to (I-6), wherein the branched structure with two or more branches derived from an initiator is a branched structure with two or three branches.
(I-8). The biodegradable polymer according to (I-1), wherein the main chain of the biodegradable polymer is polybutylene succinate-co-adipate (PBSA), polybutylene succinate (PBS), polycaprolactone (PCL), polyhydroxyalkanoate (PHA), polylactic acid (PLA), polyglycolic acid (PGA), polylactic/glycolic acid (PLGA), copolymers of lactic acid and 4- to 7-membered lactone, polybutylene adipate-co-terephthalate (PBAT), and/or sugar chain polymers such as starch or cellulose, or derivatives thereof.

### (II) Molded Article

(II-1). A molded article comprising the biodegradable polymer according to any one of (I-1) to (I-5) and (I-8), or the resin composition according to (I-6) or (I-7).

### (III) Method for Controlling Biodegradability

(III-1). A method for controlling biodegradability of a biodegradable polymer, comprising introducing an optionally substituted aliphatic hydrocarbon group into at least one terminal of the polymer chain of the biodegradable polymer.
(III-2). The method according to (III-1), wherein the biodegradable polymer is a 2-pyrrolidone polymer or copolymer.
(III-3). The method according to (III-2), wherein the method performs a polymerization reaction using a basic polymerization catalyst and a fatty acid halide, a fatty acid anhydride, or a fatty acid ester.
(III-4). The method according to (III-2) or (III-3), wherein the copolymer is a copolymer of 2-pyrrolidone and a lactam.
(III-5). The method according to (III-4), wherein the lactam is ε-caprolactam.
(III-6). The method according to (III-1), wherein the biodegradable polymer is polybutylene succinate-co-adipate (PBSA), polybutylene succinate (PBS), polycaprolactone (PCL), polyhydroxyalkanoate (PHA), polylactic acid (PLA), polyglycolic acid (PGA), polylactic/glycolic acid (PLGA), copolymers of lactic acid and 4- to 7-membered lactone, polybutylene adipate-co-terephthalate (PBAT), and/or sugar chain polymers such as starch or cellulose, or derivatives thereof.

### (IV) Method for Producing 2-Pyrrolidone Polymer or Copolymer

(IV-1). A method for producing a 2-pyrrolidone polymer or copolymer with controlled biodegradability, the method comprising the step of performing a polymerization reaction using a basic polymerization catalyst, and a fatty acid halide, a fatty acid anhydride, or a fatty acid ester.
(IV-2). The method according to (IV-1), wherein the copolymer is a copolymer of 2-pyrrolidone and a lactam.
(IV-3). The method according to (IV-2), wherein the lactam is ε-caprolactam.

### (V) Method for Producing a Biodegradable Polymer with Controlled Biodegradability

(V-1) A method for producing a biodegradable polymer with controlled biodegradability, the method comprising the step of hydroxylating at least one terminal of the biodegradable polymer by solvolysis using a diol compound such as ethylene glycol, and introducing a substituent using a fatty acid halide, a fatty acid anhydride, or a fatty acid ester.

### Advantageous Effects of Invention

The 2-pyrrolidone polymer or copolymer of the present invention having an aliphatic hydrocarbon group at at least one terminal of the polymer chain has a superior characteristic, i.e., suppression of biodegradability. Further, since the 2-pyrrolidone polymer or copolymer of the present invention retains its basic structure, it ensures the original superior property of 2-pyrrolidone polymers or copolymers, such as heat resistance or high strength. Accordingly, the 2-pyrrolidone polymer or copolymer of the present invention is applicable to usages requiring long-term stability.

Further, for other biodegradable polymers, the present invention can greatly delay the start of biodegradation even though their biodegradable properties are still retained; thus, the present invention is applicable to biodegradable usages requiring stability for a certain period of time.

### Brief Description of Drawings

[Fig. 1] An image showing the results of Test Example 1.
[Fig. 2] An image showing the results of Test Example 1.
[Fig. 3] A graph showing the results of Test Example 2.
[Fig. 4] A graph showing the results of Test Example 3.
[Fig. 5] A graph showing the results of Test Example 4.
[Fig. 6] A graph showing the results of Test Example 5.
[Fig. 7] A graph showing the results of Test Example 6 (Experiment 1).
[Fig. 8] A graph showing the results of Test Example 6 (Experiment 2).
[Fig. 9] A graph showing the results of Test Example 6 (Experiment 3).
[Fig. 10] A graph showing the results of Test Example 6 (Experiment 4).
[Fig. 11] A graph showing the results of Test Example 7 (Experiment 1).

### Description of Embodiments

Hereunder, the present invention is described in detail.

The biodegradable polymer of the present invention is characterized in that it has an optionally substituted aliphatic hydrocarbon group with 5 or more carbon atoms at at least one terminal of the polymer chain.

Further, the method for controlling biodegradability of a biodegradable polymer of the present invention is characterized by introducing an optionally substituted aliphatic hydrocarbon group into at least one terminal of the polymer chain of a biodegradable polymer.

The biodegradable polymer of the present invention or its main chain is not particularly limited insofar as it is a biodegradable polymer ensuring the effect of the present invention. Examples thereof include 2-pyrrolidone polymers or copolymers, polybutylene succinate-co-adipate, polybutylene succinate (PBS), polycaprolactone, polyhydroxyalkanoate(PHA), polylactic acid (PLA), polyglycolic acid (PGA), polylactic/glycolic acid (PLGA), copolymers of lactic acid and 4-to 7-membered lactone, polybutylene adipate-co-terephthalate (PBAT), sugar chain polymers such as starch or cellulose, or derivatives thereof.

The aliphatic hydrocarbon group of the present invention may be directly attached to the terminal of the polymer chain of a biodegradable polymer, or may be attached thereto via a carbonyl group, a urethane bond, an ether bond, or the like. More specifically, the aliphatic hydrocarbon group may be a part of a substituent attached to the terminal of the polymer chain. For example, in a structure in which a fatty acid is bonded to the terminal of the polymer chain, the aliphatic hydrocarbon moiety corresponds to the aliphatic hydrocarbon group of the present invention.

The aliphatic hydrocarbon group of the present invention may have a linear, branched (for example, 3 branches or 4 branches) or cyclic structure, and may be saturated or unsaturated. However, chain hydrocarbon groups are preferable. The number of carbon atoms of the aliphatic hydrocarbon group is not less than 5, preferably not less than 8, more preferably not less than 10, further preferably not less than 12, particular preferably not less than 14, most preferably more than 14. These aliphatic hydrocarbon groups having the above numbers of carbon atoms ensure a particularly superior biodegradability suppression effect.

The biodegradable polymer of the present invention preferably has a fatty acid at at least one terminal of the polymer chain (more specifically, it preferably has an aliphatic hydrocarbon group as a part of a fatty acid). The fatty acid may be a saturated and unsaturated fatty acid, and has carbon atoms of not less than 5, preferably not less than 8, more preferably not less than 10, further preferably not less than 12, particularly preferably not less than 14, most preferably more than 14. These fatty acids having the above numbers of carbon atoms ensure a particularly superior biodegradability suppression effect. Examples of such fatty acids include caprylic acid, capric acid, lauric acid, myristic acid, palmitic acid, stearic acid, linoleic acid, α-linolenic acid, γ-linolenic acid, arachidic acid, and arachidonic acid.

When the biodegradable polymer of the present invention is a 2-pyrrolidone polymer or copolymer having stearic acid at the terminal of the polymer chain, the weight-average molecular weight thereof is not less than 35,000, preferably not less than 40,000, more preferably not less than 50,000, further preferably not less than 60,000. The weight-average molecular weight is measured by the GPC method.

The 2-pyrrolidone polymer having a terminal aliphatic hydrocarbon group of the present invention may be produced by polymerizing 2-pyrrolidone using a basic polymerization catalyst and a fatty acid halide, a fatty acid anhydride, or a fatty acid ester.

Examples of basic polymerization catalysts include alkaline metals (such as lithium, sodium, potassium, etc.), hydrides of alkaline or alkaline earth metals (lithium hydrides, sodium hydrides, calcium hydrides, etc.), and basic organic metal compounds (such as *n*-butyllithium), which are generally used for the anionic polymerization of lactams. Of these, sodium is preferable in terms of its easy handling, and the yield.

The amount of the basic polymerization catalyst is about 1 to 6 mol%, more preferably about 2 to 6 mol%, further preferably about 3 to 6 mol%, per mol of 2-pyrrolidone. Within this range, the yield of the 2-pyrrolidone polymer does not excessively decrease; thus, rigorous purification of 2-pyrrolidone used as a monomer is not strictly necessary.

In the present invention, among fatty acid halides, fatty acid anhydrides, and fatty acid esters, fatty acid halides and fatty acid esters are preferable. Examples of fatty acid halides include fatty acid chlorides, fatty acid fluorides, and fatty acid bromides. Of these, fatty acid chlorides are preferable. Among fatty acid esters, fatty acid methyl ester is preferable.

The fatty acids of the fatty acid halides, fatty acid anhydrides, and fatty acid esters of the present invention include those listed above.

The amount of the fatty acid halide, fatty acid anhydride or fatty acid ester is preferably about 10 to 90 mol%, more preferably about 10 to 70 mol%, further preferably about 10 to 50 mol%, per mol of the basic polymerization catalyst.

A solvent such as hexane may be used in the polymerization reaction. However, bulk polymerization without a solvent can be easily performed; it also does not require solvent removal, and ensures a high yield.

The polymerization reaction may be performed under a low-energy condition, specifically, at about 10 to 50°C. The polymerization is more preferably performed at about 20 to 50° C, further preferably at about 30 to 50°C. Further, to remove hydrogen generated during the reaction, the reaction is preferably performed under reduced pressure.

Under such conditions, a basic polymerization catalyst is added to 2-pyrrolidone. After the basic polymerization catalyst disappeared as a result of the reaction, more specifically, after about a 2- to 4-hour reaction, a fatty acid halide, a fatty acid anhydride, or a fatty acid ester is added thereto, and the reaction is performed for about 1 to 24 hours. Thereafter, the produced polymer is collected by a standard method.

The 2-pyrrolidone copolymer having an aliphatic hydrocarbon group at the terminal of the polymer chain of the present invention is not particularly limited, insofar as the effect of the present invention is ensured. Examples thereof include copolymers of 2-pyrrolidone and a lactam, such as ε-caprolactam.

The copolymer of 2-pyrrolidone and ε-caprolactam having an aliphatic hydrocarbon group at the terminal of the polymer chain may be produced by performing copolymerization of 2-pyrrolidone and ε-caprolactam using a basic polymerization catalyst and a fatty acid halide, a fatty acid anhydride, or a fatty acid ester, upon the polymerization of 2-pyrrolidone.

The proportions (molar ratio) of 2-pyrrolidone and ε-caprolactam may be arbitrarily determined within a range from (2-pyrrolidone/ε-caprolactam) = (99/1) to (2-pyrrolidone/ε-caprolactam) = (1/99). By controlling the proportions, it is possible to control the property of the resulting polyamide 4 copolymer.

The basic polymerization catalyst used herein may be similar to those listed above. The amount of the basic catalyst is preferably 1.0 to 18 mol%, more preferably 1.5 to 9 mol%, further preferably 3 to 4.5 mol%, per mol of the total amount of 2-pyrrolidone and ε-caprolactam. The fatty acid halide, fatty acid anhydride, and fatty acid ester used herein may also be similar to those listed above. The amounts of the fatty acid halide, fatty acid anhydride, and fatty acid ester are preferably 0.5 to 16.5 mol%, more preferably 0.5 to 7.5 mol%, further preferably 0.5 to 3 mol%, per mol of the total amount of 2-pyrrolidone and ε-caprolactam.

A hydrocarbon solvent such as hexane may be used in the reaction. When bulk polymerization is performed without a solvent, it is advantageous in terms of omission of solvent removal; however, since this polymerization produces aggregated polyamide 4 copolymer, a pulverization step will be necessary.

The polymerization reaction may be performed at about 20 to 180°C. More preferably, the polymerization reaction may be performed at about 50 to 150°C, further preferably about 75 to 125°C. However, when the proportion of ε-caprolactam (monomer) is higher, the temperature must be set equal to or higher than the melting point of ε-caprolactam. To remove the hydrogen generated by the reaction, the reaction is preferably performed under reduced pressure.

Under the above conditions, a basic polymerization catalyst is added to 2-pyrrolidone. After the basic polymerization catalyst disappeared after the reaction, more specifically, after about a 2- to 4-hour reaction, ε-caprolactam is added thereto and an even reaction mixture is obtained. To obtain an even reaction mixture, 2-pyrrolidone, ε-caprolactam, and sodium may be simultaneously mixed. Further, a fatty acid halide, a fatty acid anhydride, or a fatty acid ester is added thereto, and the mixture is reacted for about 12 to 168 hours. Thereafter, the produced polymer is collected by a standard method.

Further, the 2-pyrrolidone polymer or copolymer of the present invention having an aliphatic hydrocarbon group at the terminal of the polymer chain may also be produced by introducing an aliphatic hydrocarbon group into the 2-pyrrolidone polymer or copolymer after the polymerization. This may be performed, for example, by reacting an isocyanate compound or an epoxy compound having an aliphatic hydrocarbon group with a 2-pyrrolidone polymer or copolymer having a reactive group such as a hydroxy group.

The 2-pyrrolidone polymer or copolymer of the present invention may be used as a resin composition by being mixed with a 2-pyrrolidone polymer or copolymer having a branched structure with two or more branches (preferably 2 branches or 3 branches) derived from the initiator. The mixing proportions of these two compounds are appropriately determined so that the desired property is obtained.

The 2-pyrrolidone polymer having a branched structure with two or more branches derived from the initiator may be synthesized according to a known method, such as the method disclosed in JP 2002-265596A. Examples of the 2-pyrrolidone copolymer having a branched structure with two or more branches derived from the initiator include a copolymer of 2-pyrrolidone and a lactam such as ε-caprolactam. This copolymer may be produced by the method disclosed in JP 2009-155608A. Examples of the initiator include carboxylic acid halide, carboxylic acid ester, and carboxylic acid anhydride.

For biodegradable polymers other than the 2-pyrrolidone polymer or copolymer, the long-chain fatty acid group may be introduced by modifying the hydroxy group at the terminal of the polymer chain with a fatty acid chloride such as stearoyl chloride. This method is effective for a biodegradable polymer having a terminal hydroxy group. If the biodegradable polymer does not have a hydroxy group at the terminal of the polymer chain, it is possible to introduce a terminal hydroxy group, for example, through partial solvolysis with a diol such as ethylene glycol.

A molded article may be produced by melt-molding of the biodegradable polymer and the resin composition of the present invention. "Melt-molding" refers to a method for melting a resin composition by heat, and molding the molten resin composition. Examples of the molding methods include melt-spinning, injection molding, extrusion molding, blow-molding, and press-molding. Examples of the molded articles obtained by such melt-molding include fibers, films, sheets, tubes, containers, and bars.

Such a 2-pyrrolidone polymer or copolymer having an aliphatic hydrocarbon group at the terminal of the polymer chain is less biodegradable. Further, since its basic structure is retained, it is possible to maintain the superior original properties of the 2-pyrrolidone polymer or copolymer, such as heat resistance, high strength, etc. Further, for other biodegradable polymers, although they still retain their biodegradable properties despite the existence of the aliphatic hydrocarbon group at the terminal of the polymer chain, the start of biodegradation can be greatly delayed.

### ■ Examples

Hereunder, examples are shown to more specifically explain the present invention. However, the present invention is not limited to these examples.

### Production Example 1: Synthesis Of Polyamide 4 Having a Terminal Long-Chain Fatty Acid

4.5 mmol of sodium (Wako Pure Chemical Industries, Ltd.) serving as a basic catalyst was added to 100 mmol of 2-pyrrolidone (Wako Pure Chemical Industries, Ltd.). The mixture was stirred for about 4 hours at 50°C until the reaction of the sodium stopped. Thereafter, 30 ml of *n*-hexane (Wako Pure Chemical Industries, Ltd.) as a continuous phase was added, and strongly stirred with a magnetic stirrer (e.g., 800 rpm) to obtain a sufficiently suspended state. Thereafter, as an initiator for the introduction of a long-chain fatty acid, 3.0 mmol of stearoyl chloride (Sigma-Aldrich Co.) was added, and strongly stirred. While maintaining the suspension state by stirring, the mixture was subjected to ring-opening polymerization at 50°C for about 1 day. Thereafter, through filtration, polyamide 4 with a terminal stearoyl group (C18) was obtained at a yield of 78%. Various polyamides 4 having a terminal fatty acid shown in Table 1 were also synthesized in the same manner. The above method is a suspension polymerization method; however, the synthesis may also be performed by bulk polymerization.

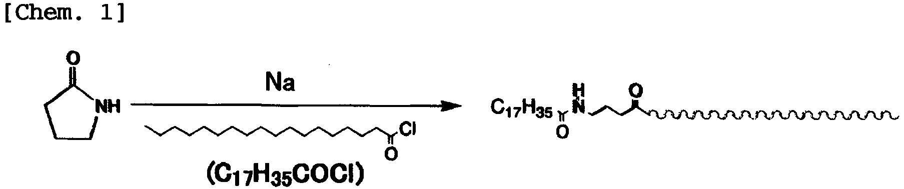

**Table 1**

| Polyamides 4 with various terminal groups | | |
|---|---|---|
| | Terminal Fatty Acid | Initiator |
| PA4 | - | 1,3,5-benzenetricarbonyl chloride |
| C2 | Acetyl | CH₃COCl |
| C3 | Propyl | CH₃CH₂COCl |
| C6 | Hexanoyl | CH₃(CH₂)₄COCl |
| C10 | Decanoyl | CH₃(CH₂)₈COCl |
| C12 | Lauroyl | CH₃(CH₂)₁₀COCl |
| C14 | Myristoyl | CH₃(CH₂)₁₂COCl |
| C16 | Palmitoyl | CH₃(CH₂)₁₄COCl |
| C18 | Stearoyl | CH₃(CH₂)₁₆COCl |

| | | |
|---|---|---|
| PA4: 3-branched polyamide 4 (control) obtained by using 1,3,5-benzenetricarbonyl chloride as an initiator C2 to C18: polyamides 4 with various terminal fatty acids The polymerizations of C2 to C16 were performed using acid chlorides of Wako Pure Chemical Industries, Ltd., and the polymerization of C18 was performed using an acid chloride of Aldrich. | | |

### Test Example 1: Biodegradability of Polyamide 4 Having a Terminal Fatty Acid (Microorganism)

### ■ Method

2% agar powder (Difco) was added to a medium containing 0.06 mM MgSO₄, 0.25 mM CaCl₂, 3.72 mM FeCl₃, 0.3 mM (NH₄)SO₄, 0.125 mM KH₂PO₄, 0.25 mM K₂HPO₂, 0.25 mM Na₂HPO₄, and 0.064 mM NH₄Cl in which 1% polymer powder (PA4, C3, C6, C10, C12, C14, C16, C18) is dispersed, thereby preparing a plating medium. The reagents used for the medium were obtained from Wako Pure Chemical Industries, Ltd. The polymers were the same as those synthesized in Production Example 1. In this plating medium, polyamide 4-decomposing bacteria genus *Pseudomonas* ND-11 strain (see Patent No. 3598347A) was cultured. By visually inspecting the presence or absence of clear zone formation, biodegradability of polyamide 4 having a terminal fatty acid by microorganism was examined.

### ■ Results

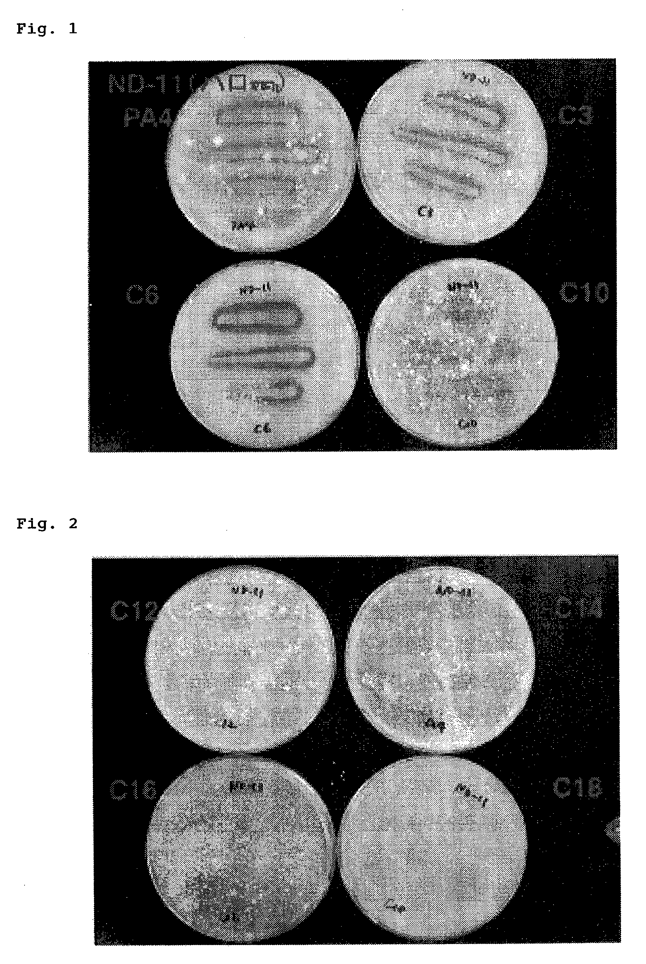

Figs. 1 and 2 show the results of 7 days of static culture at 37°C. In PA4, and C2 to C6, the polymers near the bacterial cells disappeared (generation of halo→biodegradation); however, biodegradation was not observed in the polymers having a long-chain terminal fatty acid with not less than 12 carbons, i.e., the polymers having a greater terminal hydrophobicity.

### Test Example 2: Biodegradability of Polyamide 4 Having Terminal Fatty Acid (Activated Sludge)

### ■ Method

Each kind of polymer powder (PA4, C2, C3, C6, C10, C12, C14, C18) synthesized in Production Example 1 was dispersed in an inorganic medium disclosed in JIS K6950, and a biodegradation test was performed according to the method (disclosed in JIS K6950) of measuring oxygen consumption with biodegradation using a BOD measurement device (BOD tester 200F: Taitec Co., Ltd.). In this method, a standard activated sludge (Chemicals Evaluation and Research Institute, Japan) was used as a microorganism source.

### ■ Results

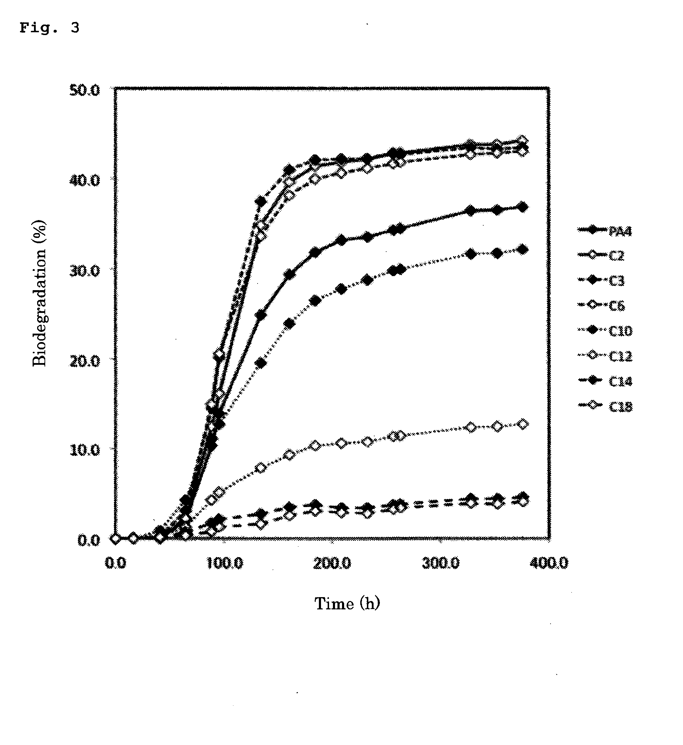

Fig. 3 shows the results. The results reveal that biodegradation was suppressed in the polymers having a long-chain terminal fatty acid with 10 or more carbons, and that the effect was particularly significant in the polymers having a terminal fatty acid with C12 or more chains.

The table below shows the number-average molecular weights and the weight-average molecular weights of the individual polyamides 4 used in this test example. The number-average molecular weights and the weight-average molecular weights were calculated based on the results of measurement performed with a high-speed GPC system (HLC-8220 GPC system: TOSOH) using polymethyl methacrylate as a standard substance.

**Table 2**

| | Mn×10³ | Mw×10³ | Mw/Mn |
|---|---|---|---|
| PA4 | 28.5 | 100.6 | 3.53 |
| C2 | 10.6 | 42.1 | 3.97 |
| C3 | 8.9 | 32.7 | 3.69 |
| C6 | 7.8 | 23.1 | 2.95 |
| C10 | 9.0 | 35.2 | 3.93 |
| C12 | 8.5 | 35.4 | 4.16 |
| C14 | 5.3 | 14.8 | 2.78 |
| C18 | 14.7 | 66.2 | 4.50 |

| | | | |
|---|---|---|---|
| Mn: number-average molecular weight Mw: weight-average molecular weight | | | |

### Test Example 3: Biodegradability of a Blend System (Activated Sludge)

### ■ Method

The polymers PA4 and C18 synthesized in Production Example 1 were mixed at weight ratios of 95/5, 50/50, and 30/70 (PA4/C18), and an even solution was made from the mixture using trifluoroethanol. Then, a blend film was produced by casting. The film was pulverized by a frozen pulverizer (Freezer/Mill 6700: SPEX CertiPrep Group L.L.C.), and subjected to an activated sludge biodegradation test in the same manner as in Example 2.

### ■ Results

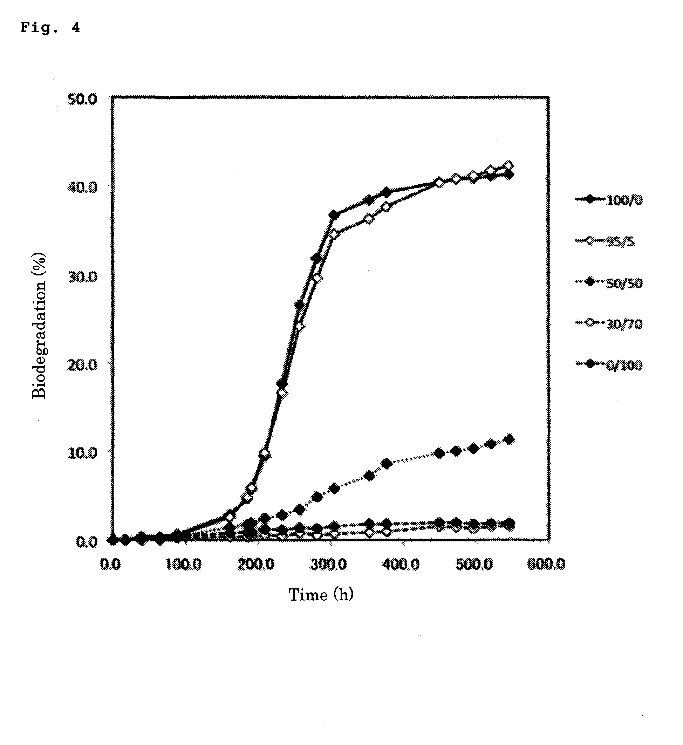

Fig. 4 shows the results. The results reveal that the biodegradability can be suppressed by blending a polyamide 4 having a general biodegradability with a polyamide 4 having a terminal long-chain fatty acid. The results also reveal that the biodegradability can be controlled by changing the blend ratio.

### Production Example 2: Synthesis of PBSA Having Terminal Stearoyl

### 1. Introduction of hydroxy groups into the two terminals of PBSA

PBSA (Bionolle #3003: Showa Highpolymer Co., Ltd.) 10 g Ethylene glycol 1 g

The mixture was first reacted at 180°C for 24 hours, and then dissolved in chloroform. It was then poured in methanol to be purified by reprecipitation (yield 57.6%). Hereunder, the purified precipitate is called PBSA diol (PCL diol, PBS diol, and PLA diol below are obtained in the same manner).

### 2. Introduction of stearoyl group

2 g (0.48 mmol) of PBSA diol and a solvent (5 mL of chloroform) were placed in a flask, and completely fused. 0.32 g (3.84 mmol) of sodium bicarbonate was added thereto, and 0.29 g (0.96 mmol) of stearoyl chloride were subsequently added thereto. The mixture was reacted by being stirred with a stirrer at 60°C for 24 hours. After the reaction, the reaction solution was filtered with a filter paper, and the filtered liquid was poured in methanol to cause reprecipitation, thereby obtaining 1.17 g of stearoyl PBSA as a white solid (yield 52%; stPBSA(I) in Table 3). By changing the reaction time, it is possible to change the stearoyl introduction degree (stPBSA(II) and stPBSA(III) in Table 3).

PCL, PBS, and PLA may be stearoylated in the same manner.

### Stearoyl PCL

5.4 g (0.5 mmol) of PCL diol and a solvent (5 mL of chloroform) were placed in a flask, and completely fused. 0.32 g (3.84 mmol) of sodium bicarbonate was added thereto, and 0.30 g (1 mmol) of stearoyl chloride were subsequently added thereto. The mixture was reacted by being stirred with a stirrer at 60° C for 24 hours. After the reaction, the reaction solution was filtered with a filter paper, and the filtered liquid was poured in methanol to cause reprecipitation, thereby obtaining 3.41 g of stearoyl PCL (stPCL) as a white solid (yield 60%).

### Stearoyl PBS

3.0 g (0.38 mmol) of PBS diol and a solvent (10 mL of chloroform) were placed in a flask, and completely fused. 0.26 g (3.04 mmol) of sodium bicarbonate was added thereto, and 0.23 g (0.76 mmol) of stearoyl chloride were subsequently added thereto. The mixture was reacted by being stirred with a stirrer at 60°C for 24 hours. After the reaction, the reaction solution was filtered with a filter paper, and the filtered liquid was poured in methanol to cause reprecipitation, thereby obtaining 2.17 g of stearoyl PBS (stPBS) as a white solid (yield 68%).

### Stearoyl PLA

1.0 g (0.77 mmol) of PLA diol and a solvent (5 mL of chloroform) were placed in a flask, and completely fused. 0.5 g (5.95 mmol) of sodium bicarbonate was added thereto, and 0.48 g (1.58 mmol) of stearoyl chloride were subsequently added thereto. The mixture was reacted by being stirred with a stirrer at 60° C for 24 hours. After the reaction, the reaction solution was filtered with a filter paper, and the filtered liquid was poured in methanol to cause reprecipitation, thereby obtaining 0.54 g of stearoyl PLA (stPLA) as a white solid (yield = 38%).

The table below shows characteristics of unstearoylated resins, and the stearoyl resins obtained by the above methods.

**Table 3**

| | Mn | Mw | Stearoylation degree (%) of OH at polymer terminal | Content of St group (weight ratio)(wt%) |
|---|---|---|---|---|
| PCL | 10310 | 16590 | 0 | 0 |
| stPCL | 13100 | 19060 | 10 | 0.46 |
| PBSA | 4390 | 6630 | 0 | 0 |
| stPBSA(I) | 5810 | 7490 | 11.4 | 2.03 |
| stPBSA(II) | 6180 | 7750 | 11.2 | 1.92 |
| stPBSA(III) | 6520 | 7770 | 6.8 | 1.17 |
| PBS | 7840 | 14450 | 0 | 0 |
| stPBS | Not measured | Not measured | 0.4 | 0.47 |
| PLA | 8000 | 11300 | 0 | 0 |
| stPLA | 7800 | 11600 | 8.1 | 1.68 |

### Test Example 4: Biodegradability of Polycaprolactone (PCL) Having a Terminal Fatty Acid (Activated Sludge)

### ■ Method

PCL and stPCL shown in Table 3 were subjected to an activated sludge biodegradation test in the same manner as in Test Example 2.

### ■ Results

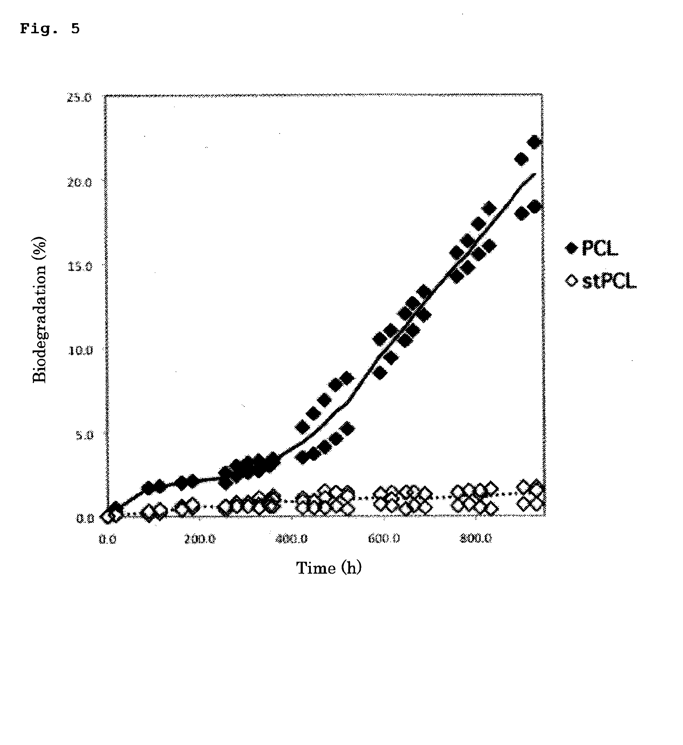

Fig. 5 shows the results. The results reveal that the biodegradation of PCL having a terminal stearoyl was suppressed.

### Test Example 5: Biodegradability of Terminal Fatty Acid Polybutylene Succinate Adipate (PBSA) (Activated Sludge)

### ■ Method

PBSA and stPBSA(I) shown in Table 3 were subjected to an activated sludge biodegradation test in the same manner as in Test Example 2.

### ■ Results

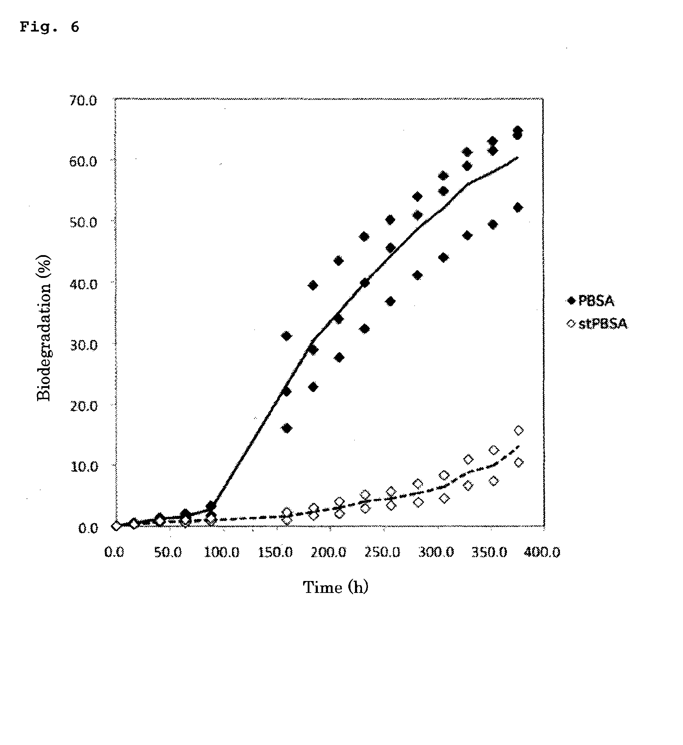

Fig. 6 shows the results. The results reveal that the biodegradability of PBSA having a terminal stearoyl was suppressed.

### Test Example 6: Biodegradability of PCL, PBSA and PBS Having a Terminal Fatty Acid (Enzymatic Hydrolysis Test)

### Experiment 1

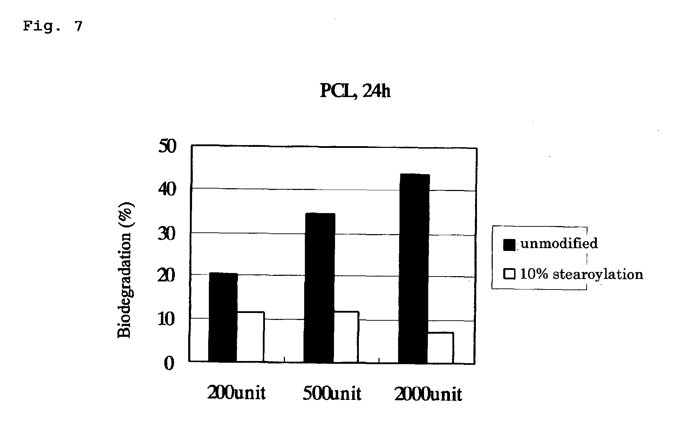

Enzyme: Lipase *(Rhizopus delemar,* Seikagaku Corporation), 200, 500, 2000 units
Conditions: 24 hours, 37°C
Polymer: 20 mg each of PCL (Daicel Corporation, Placcel H1P) and stearoyl PCL (degree of stearoylation = 10%) shown in Table 3, powdered by pulverization with a frozen pulverizer (6700 Freezer/Mill: SPEX CertiPrep Group L.L.C.)
Experiment Method: 20 mg of each polymer sample was placed in a 7.5 mL test tube having a screw-type cap, and 5 mL of phosphate buffer (pH 7) in which a predetermined amount of lipase powder is dissolved was added thereto. The mixture was stirred and left unattended for a predetermined time in a hot bath at 37°C, so as to advance an enzymatic hydrolysis reaction. At the same time, as a comparative experiment, a test tube having a phosphate buffer containing an enzyme with no polymer sample, and a test tube having a phosphate buffer containing only a polymer sample with no enzyme were also left unattended at 37° C. The number of each test tube was n = 3 or n = 2.
Biodegradation Assessment: Each solution thus subjected to the enzymatic hydrolysis test at 37° C was diluted to 20 ml, and then filtered with a 0.20 µm disposable filter. The concentration of the organic substance component solubilized by the enzymatic hydrolysis was determined by measuring the filtrate with TOC (Total Organic Carbon Measurement Device TOC-VCSH, Shimadzu), subtracting the values of the comparative experiment with only an enzyme and the comparative experiment with only a polymer sample, and dividing the result by the concentration upon complete solubilization, thereby finding a degree of enzymatic hydrolysis. Fig. 7 shows the results.
Results: For the unmodified PCL, biodegradation (hydrolysis quantity) for 24 hours was increased with an increase of lipase amount; in contrast, for the stearoyl PCL, although a small amount thereof was biodegraded, the amount was almost constant regardless of the enzyme amount (an increase in enzyme amount did not significantly facilitate biodegradation).

### Experiment 2

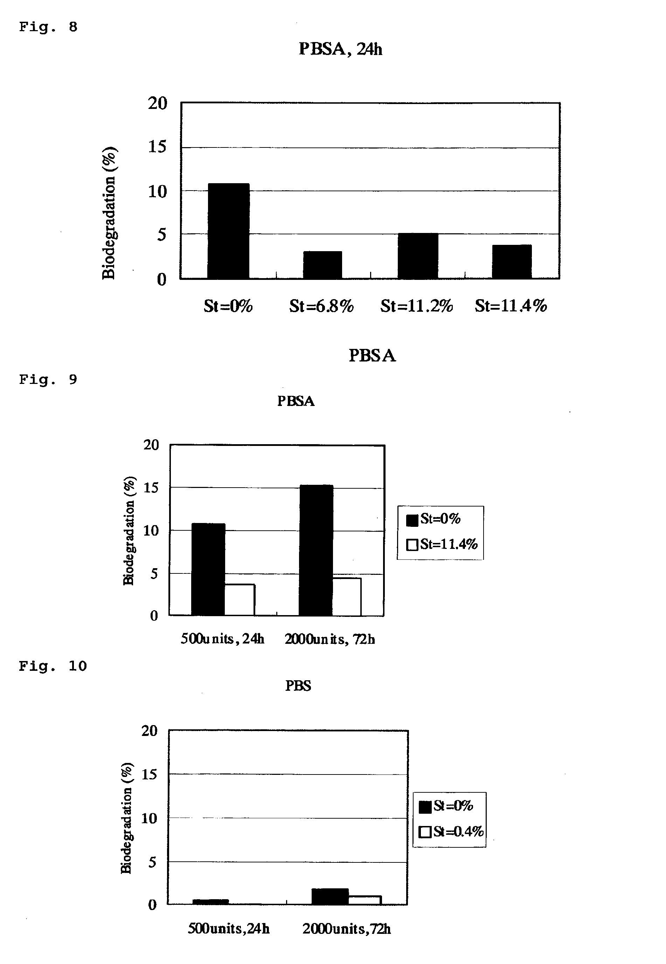

Enzyme: Lipase *(Rhizopus delemar),* 500 units
Conditions: 24 hours, 37°C
Polymer: 20 mg each of pulverized samples of stearoyl PBSA (6.8-11.4%) and PBSA (Showa Highpolymer Co., Ltd.: Diol-introduced Bionolle #3001) shown in Table 3.
Biodegradation Assessment: the same method as in Experiment 1 was performed. Fig. 8 shows the results.
Results: More than 10% of unmodified PBSA was degraded under the specified conditions. It was found that the biodegradation inhibitory effect was exhibited when the terminal stearoyl was 6.8% or more.

### Experiment 3

Enzyme: Lipase *(Rhizopus delemar),* 500-2000 units
Conditions: 24 to 72 hours, 37°C
Polymer: 20 mg each of pulverized samples of stearoyl PBSA (degree of stearoylation = 11.4%) and PBSA (Showa Highpolymer Co., Ltd.: Diol-introduced Bionolle #3001) shown in Table 3. Biodegradation Assessment: The same method as in Experiment 1 was performed. Fig. 9 shows the results.
Results: In contrast to the results of Experiment 2 in which the difference in biodegradation between the unmodified PBSA and the stearoyl PBSA was not significant, although the biodegradation of the unmodified PBSA was advanced under a biodegradation-facilitating condition (2000 units, 72 h), the biodegradation of the stearoyl PBSA was almost the same as that under a milder condition (500 units, 24 h). This clearly shows the effect of stearoylation.

### Experiment 4

Enzyme: Lipase *(Rhizopus delemar),* 500-2000 units
Conditions: 24-72 hours, 37°C
Polymer: 20 mg each of PBS and stearoyl PBS (degree of stearoylation = 0.4%) shown in Table 3.
Biodegradation Assessment: The same method as in Experiment 1 was performed. Fig. 10 shows the results.
Results: The unmodified PBS was slightly degraded under a condition of 2000 units, 72 h, even though PBS is considered less biodegradable compared with PBSA; in contrast, a biodegradation inhibition effect was observed in the stearoyl PBS.

### Test Example 7: Biodegradability of PLA Having Terminal Fatty Acid (Non-Enzymatic Hydrolysis Test and Enzymatic Hydrolysis Test)

### Experiment 1: Non-Enzymatic Hydrolysis Test

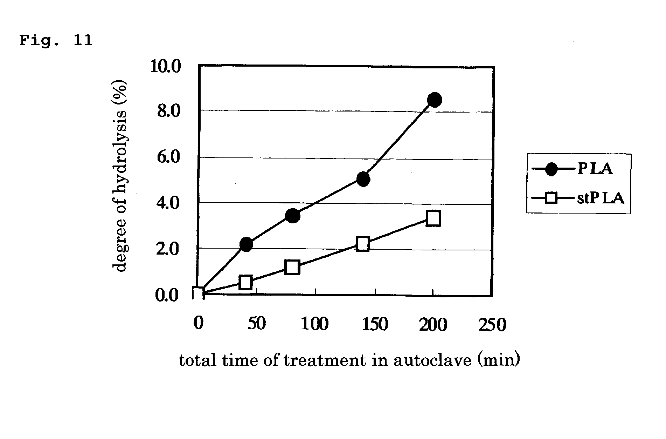

Heavy water (D2O): 100 g of heavy water in which 50 mg of DSS (3-(trimethylsilyl) propane sulfonic acid sodium salt, Merck) as an internal standard is dissolved
Conditions: 121°C, 40-200 minutes
Polymer: 30 mg each of fine powder of stearoyl PLA (degree of stearoylation at the terminal OH = 8.1%, wt% of the stearoylation moiety in the resin = 1.68 wt%) and PLA (diol-introduced polylactic acid (Tm 165°C)) shown in Table 3
Experiment Method: 30 mg of each polymer sample was placed in a 15 mL test tube, and 7.5 mL of heavy water containing 0.05 wt% DSS was added thereto. The mixture was subjected to a non-enzymatic hydrolysis acceleration test in an autoclave at 121°C. Biodegradation Assessment: During the hydrolysis test in an autoclave, the test tube was taken out of the autoclave at a predetermined interval, and 0.6 mL of the supernatant was sampled while preventing contamination by the polymer powder. The sample was directly subjected to ¹HNMR measurement, and the quantity of the portion rendered water-soluble by the hydrolysis was determined. Based on the methyl protons (0.000 ppm) of DSS used as an internal standard reagent, and based on its peak strength (100.00), the total strength of the methyl protons of the lactic acid and the water-soluble lactic acid oligomer that appear at 1.6-1.35 ppm was measured on a NMR spectrum. Meanwhile, NMR of a sample obtained by dissolving 3.0 mg lactic acid in 7.5 mL of heavy water containing 0.05 wt% DSS was measured, and an calibration curve was created assuming that the spectrum intensity at 1.6-1.35 ppm is an intensity of 10% hydrolysed PLA. Using the calibration curve and the intensity at 1.6-1.35 ppm, a degree of hydrolysis was found based on the amount of water-soluble lactic acid oligomer. Fig. 11 shows the results. Results: The hydrolysis inhibitory effect of the stearoyl group introduced into the resin terminal was exhibited even when the amount thereof was about 1.68 wt%. The rate-determining step in the biodegradation in compost is said to be a non-enzymatic hydrolysis reaction at or near 58-60°C. Thus, the above results show effective suppression of biodegradation in compost.

### Experiment 2: Enzymatic Hydrolysis Test

Enzyme: Proteinase K (Wako Pure Chemical Ind., Ltd.), 200 units Phosphate Buffer (0.1 M, pH 7): 5 ml
Conditions: 90 hours, 37°C
Polymer: 20 mg each of fine powder of the same samples (diol-introduced PLA, stearoyl PLA) as those used in Experiment 1 Experiment Method: The same method as in Experiment 1 of Test Example 6 was performed.
Biodegradation Assessment: The solution subjected to the enzymatic hydrolysis test at 37°C was diluted to 40 ml, and filtered with a 0.20 µm disposable filter. 15 ml of the filtrate was evaporated to dryness. The quantity of the organic component solubilized by the enzymatic hydrolysis in the dry solid was determined by adding 0.6 mL of heavy water containing 0.05 wt% DSS as an internal standard, completely dissolving the dry solid therein, then measuring ¹HNMR, and comparing the intensity of the proton peak derived from the degraded matter with a separately prepared calibration curve. Table 4 shows the results.
Results: The stearoyl group introduced into the resin terminal exhibited a hydrolysis inhibitory effect to the same extent as that in Experiment 1.

**Table 4**

| | Degree of biodegradation (%) by Proteinase K |
|---|---|
| Unmodified PLA (control sample) | 61.1 |
| Stearoyl PLA | 37.4 |

## Claims

1. A biodegradable polymer comprising an optionally substituted aliphatic hydrocarbon group having 5 or more carbon atoms at at least one terminal of the polymer chain, wherein the biodegradable polymer has a weight-average molecular weight of not less than 35,000 when the biodegradable polymer has a 2-pyrrolidone polymer or copolymer as its main chain and stearic acid at the terminal of the polymer chain.

2. The biodegradable polymer according to claim 1, wherein the biodegradable polymer has a 2-pyrrolidone polymer or copolymer as its main chain.

3. The biodegradable polymer according to claim 2, wherein the biodegradable polymer is obtained by a polymerization reaction using a basic polymerization catalyst, and a fatty acid halide, a fatty acid anhydride or a fatty acid ester.

4. The biodegradable polymer according to claim 2 or 3, wherein the 2-pyrrolidone copolymer is a copolymer of 2-pyrrolidone and a lactam.

5. A resin composition comprising the biodegradable polymer according to claim 2 or 3, and a 2-pyrrolidone polymer or copolymer having a branched structure with two or more branches derived from an initiator.

6. The biodegradable polymer according to claim 1, wherein the main chain of the biodegradable polymer is polybutylene succinate-co-adipate (PBSA), polybutylene succinate (PBS), polycaprolactone (PCL), polyhydroxyalkanoate (PHA), polylactic acid (PLA), polyglycolic acid (PGA), polylactic/glycolic acid (PLGA), copolymers of lactic acid and 4- to 7-membered lactone, polybutylene adipate-co-terephthalate (PBAT), and/or sugar chain polymers such as starch or cellulose, or derivatives thereof.

7. A molded article comprising the biodegradable polymer according to any one of claims 1 to 3 and 6, or the resin composition according to claim 5.

8. A method for controlling biodegradability of a biodegradable polymer, comprising introducing an optionally substituted aliphatic hydrocarbon group into at least one terminal of the polymer chain of the biodegradable polymer.

9. The method according to claim 8, wherein the biodegradable polymer is a 2-pyrrolidone polymer or copolymer.

10. The method according to claim 8, wherein the biodegradable polymer is polybutylene succinate-co-adipate (PBSA), polybutylene succinate (PBS), polycaprolactone (PCL), polyhydroxyalkanoate (PHA), polylactic acid (PLA), polyglycolic acid (PGA), polylactic/glycolic acid (PLGA), copolymers of lactic acid and 4- to 7-membered lactone, polybutylene adipate-co-terephthalate (PBAT), and/or sugar chain polymers such as starch or cellulose, or derivatives thereof.
